# EUROPEAN PATENT APPLICATION

(11) **EP 0 950 877 A2**
(43) Date of publication of application: **20.10.1999**
(21) Application number: 99106157.3
(22) Date of filing: 07.04.1999
(51) Int. Cl.: G01F 1/075

(54) **Compact meter for liquids**

(30) Priority: 16.04.1998 IT PD980089
(71) Applicant: IMR S.p.A., 34076 Romans d'Isonzo (Gorizia) (IT)
(72) Inventor: Giolo, Fabio, 33050 Bagnaria Arsa (Udine) (IT)
(74) Representative: Modiano, Guido, Dr.-Ing.

(57) **Abstract**

A meter for liquids comprising a tubular body (11), internally provided with a rotor (14) whereto a magnet (15) is keyed, and with ends which can be engaged in pipes in which there flows a liquid whose flow-rate is to be detected together with the volume, detected as a function of the flow-rate; a readout device (19) being associated with the tubular body (11) and being arranged inside a "dry" chamber (17); the magnet being operatively connected to a pulse counter (23) which is located inside the "dry" chamber (17) and is connected to a display.

## Description

The present invention relates to a meter for liquids.

It is well-known that suitable meters are currently used to calculate the volume of a liquid flowing in a pipe.

Volumetric meters capable of directly measuring the volume of the liquid that flows, and other meters known as integrating meters, which detect the volume by measuring the flow-rate, are commercially available.

Considering this last type, it is usually constituted by a tubular body which has, at its two ends, sleeves in which there engage corresponding ends of two pipes in which the liquid flows.

A rotor, usually made of plastics, is inserted in the tubular body and is turned by entrainment when the fluid flows.

In some meters, the rotor is connected directly by means of gears, lever systems and transmissions, which constitute the readout device, to the pointers of a display, which are arranged in a region of the meter so as to be visible to a user.

Two different kinds of meter are widely commercially available which differ according to whether the readout is of the "dry" or "wet" type.

In the first case, a sealing wall is in fact interposed between the rotor and said readout device and prevents the passage of the liquid, and the gears of the readout device can be driven by means of the coupling provided between a first magnet, keyed to the rotor, and a second magnet, which is located in the "dry" chamber and is directly connected to the gears.

In the second case, instead, the gears of the readout device are immersed in the liquid and accordingly this type of meter can be used only for particular applications with liquids whose flow does not damage the gears.

Meters with a "wet" chamber have been practically superseded by meters with a "dry" chamber indeed because the latter ensure universal and flexible use.

Other types of meter, although having a gear-based readout device, have a remote digital display which allows to locate the meter for example in a street manhole without thereby making it awkward for a user to read it.

In this case, the connection between the readout device and the display is provided by means of an electric cable; however, problems are encountered in these meters in terms of wiring between the readout device and the display, together with electrical problems affecting the connection cable and due to ambient humidity.

Moreover, it must be stressed that the mechanical components for transmitting motion from the second sensor to the readout device are often affected by malfunctions and failures and in particular by inaccuracy in detecting the flow-rate.

Further, it is important to note that the mechanical components are rather bulky and are, to a large extent, responsible for the dimensions of the meter.

The aim of the present invention is to provide a meter for liquids which solves all the above-mentioned drawbacks of conventional meters.

Within the scope of this aim, a particular object of the present invention is to provide a meter for liquids which ensures precision in detection and reliability over time.

A further object of the invention is to provide a meter for liquids which offers high operating flexibility in the management of the acquired data.

A further object of the invention is to provide a meter for liquids whose readout device is compact.

Still a further object of the present invention is to provide a meter for liquids which is not subject to malfunctions and does not require particular wiring operations.

This aim, these objects and others which will become apparent hereinafter are achieved by a meter for liquids, comprising a tubular body, internally provided with a rotor whereto a magnet is keyed, with ends which can be engaged in pipes in which there flows a liquid whose flow-rate is to be detected together with the volume which is detected as a function of said flow-rate; a readout device being associated with said tubular body and being arranged inside a "dry" chamber, characterized in that said magnet is operatively connected to a pulse counter which is located inside said "dry" chamber and is connected to a display.

Further characteristics and advantages of the present invention will become apparent from the following detailed description of a preferred embodiment thereof, illustrated only by way of non-limitative example in the accompanying drawings, wherein:

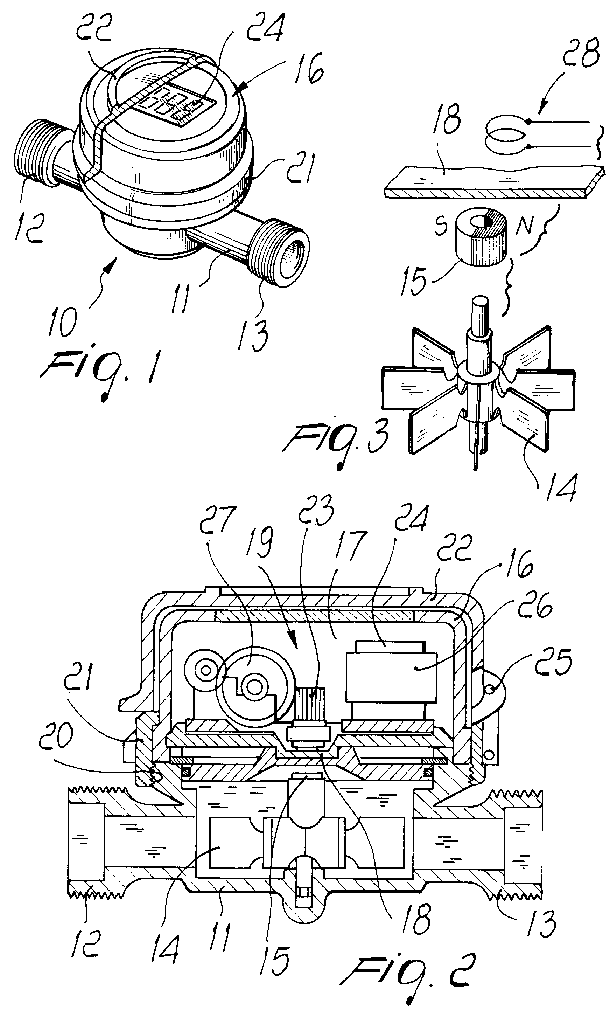

Figure 1 is a perspective view of a meter for liquids according to the invention;
Figure 2 is a sectional view, taken along a transverse plane, of the meter shown in Figure 1;
Figure 3 is a schematic perspective exploded view of constructive details of the meter.

With reference to the above figures, a meter for liquids according to the present invention is generally designated by the reference numeral 10 and comprises a tubular body 11 which has, at its ends, a first sleeve and a second sleeve which are respectively designated by the reference numerals 12 and 13.

Each one of the first and second sleeves 12 and 13 is externally threaded and is adapted to engage a complementarily threaded end of a pipe, not shown in the above figures for the sake of simplicity, inside which there flows a liquid whose flow rate must be detected.

Meter 10 is provided with a rotor 14 of a per se known type which is arranged inside the tubular body 11 and is made of plastics in this case.

A magnet 15 is keyed on the rotor 14 and turns rigidly with the rotor 14 by way of the passage of the liquid through the tubular body 11.

The magnet 15, which is conveniently annular or cylindrical, has polarities which are distributed about the axis of rotation; accordingly, in the case of two poles, such poles are diametrically opposite.

A hollow body 16 is associated in an upward region with the tubular body 11 and internally forms a "dry" chamber 17, which is kept separated from the tubular body 11 by a sealing wall 18.

Inside the "dry" chamber 17 a readout device is provided, generally designated by the reference numeral 19, which will be described in greater detail hereinafter.

On the outer walls of the hollow body 16, at a region that lies proximate to the tubular body 11, there is a threaded portion 20 with which a sealing ring 21 engages.

The hollow body 16 is further provided with a cover 22 which is articulated to a hinge 25.

The readout device 19 comprises, in this embodiment, a pulse counter 23 which is connected to a liquid crystal display 24.

The readout device 19 is further provided with a memory 26 and with a backup battery 27.

The magnet 15 keyed to the rotor 14 is turned due to the flow of the liquid in the tubular body 11, and its movement is detected by the pulse counter 23, which is constituted for example by a Hall-effect probe or by another device which is capable of detecting the passage for example of a notch or other reference marking provided on the magnet 15.

The rotary motion of the magnet 15 further provides the energy required for the display 24 and for recharging the backup battery 27, which supplies the memory 26.

By way of the presence of the memory 26, it is in fact possible to manage the acquired data related to the flow of the liquid in a very flexible manner.

The required energy can also be induced by the rotating magnetic field of the magnet 15 on a winding 28 which is composed of one or more turns and is located in the "dry" chamber 17 adjacent to, or integrated with, the wall 18.

The amount of energy generated must be conveniently higher than the amount strictly necessary for the electrical operation of the readout device 19, so as to have a fraction which charges an accumulator which supplies the memory 26 and the other electrical parts if the rotor 14 is not operating but it is still necessary, for example, to acquire the stored data.

For this reason, the winding 28 must be sized on the basis of this requirement.

In practice it has been observed that the present invention easily achieves the aim and all the intended objects.

An important advantage is in fact achieved by the present invention in that a meter for liquids has been provided which ensures precision in detection and most of all ensures good reliability over time.

Another advantage of the present invention is that the readout device of the meter is compact with respect to conventional types of meter.

Another important advantage is achieved by the present invention in that a meter for liquids has been provided which allows to achieve high operating flexibility in the management of the acquired data.

It should also be observed that the entire portion of the hollow body 16 can be used to replace a conventional portion in a meter which is already in use by simply unscrewing the conventional portion from the tubular body 11 and screwing on the one according to the invention.

Another advantage achieved by the present invention is that the meter for liquids is not subject to malfunctions and requires no particular wiring operations.

All the details may be replaced with other technically equivalent elements; thus, for example, the pulse counters can also be of another type, for example of the encoder type.

In this case, in particular, in the "dry" chamber 17 there must be an additional magnet which faces the magnet 15, can rotate about an axis, and is turned by said magnet 15.

The materials employed, so long as they are compatible with the contingent use, as well as the dimensions, may be any according to requirements.

The disclosures in Italian Patent Application No. PD98A000089 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A meter for liquids, comprising a tubular body, internally provided with a rotor whereto a magnet is keyed, with ends which can be engaged in pipes in which there flows a liquid whose flow-rate is to be detected together with the volume, which is detected as a function of said flow-rate; a readout device being associated with said tubular body and being arranged inside a "dry" chamber, characterized in that said magnet is operatively connected to a pulse counter which is located inside said "dry" chamber and is connected to a display.

2. The meter according to claim 1, characterized in that said operative connection between said magnet and said pulse counter is achieved by means of a reference provided on the magnet and detectable by said pulse counter.

3. The meter according to claim 1, characterized in that said pulse counter is an encoder.

4. The meter according to claim 1, characterized in that said operative connection between said magnet and said pulse counter is achieved by means of a magnetic sensor located in the "dry" chamber and associated with said pulse counter.

5. The meter according to claim 1, characterized in that an additional magnet is located in said "dry" chamber so as to face said magnet keyed to said rotor and is operatively connected to said pulse counter, can rotate about an axis and is turned by the first magnet.

6. The meter according to claim 1, characterized in that said display is digital.

7. The meter according to claim 1, characterized in that said readout device is connected to a memory located in the "dry" chamber.

8. The meter according to claim 1, characterized in that it comprises a backup battery.

9. The meter according to claim 8, characterized in that it comprises an electrical winding arranged in said "dry" chamber and crossed by the magnetic flux of said magnet keyed to said rotor, in order to independently generate electric power induced by the rotation of the rotor on the winding and adapted for the operation of the readout device, to which it is connected, and of an accumulator acting as backup battery.
